Europäisches Patentamt

European Patent Office

Office européen des brevets

(19)

(11) Numéro de publication: **0 387 124**
**A1**

## (12) DEMANDE DE BREVET EUROPEEN

(21) Numéro de dépôt: **90400514.7**

(22) Date de dépôt: **23.02.90**

(51) Int. Cl.5: **B23P 19/04, E04F 21/00**

(30) Priorité: **09.03.89 FR 8903090**
**11.04.89 FR 8904735**
**28.11.89 FR 8915650**

(43) Date de publication de la demande:
**12.09.90 Bulletin 90/37**

(84) Etats contractants désignés:
**AT BE CH DE DK ES GB GR IT LI LU NL SE**

(71) Demandeur: **FERCO INTERNATIONAL Usine de Ferrures de Bâtiment Société à responsabilité limitée dite**
**2, rue du Vieux-Moulin Reding**
**F-57400 Sarrebourg(FR)**

(72) Inventeur: **Kautt, Jean-Jacques**
**24, rue Pertois**
**F-67000 Strasbourg(FR)**

(74) Mandataire: **Rodhain, Claude et al**
**Cabinet Claude Rodhain 30, rue la Boétie**
**F-75008 Paris(FR)**

(54) **Machine pour la pose automatique de joint souple, en particulier d'un joint extérieur dans une rainure de vantail.**

(57) L'invention concerne une machine pour la pose automatique de joint, en particulier d'un joint extérieur dans une rainure de vantail de fenêtre ou de porte-fenêtre, comportant un mécanisme d'amenage, de mise en référence et de mesure du vantail, un portique support, un système de dévidage du joint, un système de bridage du vantail et un dispositif de pose et de découpe du joint comprenant un bâti, un portique mobile en translation sur ce bâti, un chariot mobile en translation sur ce portique.

Ledit chariot (7) mobile supporte une tête de manipulation (3) rotative par rapport au chariot et comprenant des moyens de guidage et d'entraînement du joint, une partie fixe (10) support les moyens de coupe et un bras (11) articulé sur celle-ci supportant à son extrémité libre les moyens de pose du joint.

La machine comporte également un mécanisme d'amenage et d'évacuation des vantaux à traiter, constitué de préférence par deux doigts d'entraînement, montés ensemble pour effectuer un mouvement de va-et-vient synchronisé.

Elle comprend également un système de bridage du vantail spécifique monté sur le chariot (7) et la tête de manipulation (3).

EP 0 387 124 A1

Xerox Copy Centre

# FIG.2

## Machine pour la pose automatique de joint souple, en particulier d'un joint extérieur dans une rainure de vantail.

L'invention concerne une machine pour la pose automatique de joint souple, en particulier d'un joint extérieur dans une rainure de vantail de fenêtre ou de porte-fenêtre, comportant une table de chargement, un dispositif de stockage du joint et un dispositif de pose et de découpe de ce dernier.

Un vantail réalisé en bois, en matière plastique, en aluminium ou équivalent est généralement constitué de deux traverses horizontales et de deux montants verticaux formant un cadre qui reçoit sur sa périphérie extérieure des ferrures permettant son articulation ou son support sur le dormant. Le cadre comporte éventuellement des éléments de recouvrement du dormant. Les montants et traverses comportent des épaulements intérieurs destinés à recevoir l'élément de vitrage ou analogue d'une part et des feuillures externes recevant selon le cas divers éléments de ferrure d'autre part. Généralement ces ferrures (boîtier de commande, tringles, tétières, renvois d'angle, compas, paumelles) sont fixées en feuillure dans le champ périphérique externe du vantail également appelé ouvrant.

Pour les besoins d'étanchéité il convient de placer des joints en feuillure entre le cadre dormant et le vantail d'une part et entre le vitrage et les épaulements d'autre part. Dans le cas où le vitrage est scindé en plusieurs parties, il convient également de porter des joints sur les éléments venant recouvrir les bords des parties vitrées. Ce sont des parcloses et le "petit bois" qui viennent solidariser la vitre ou les vitres sur son vantail.

Traditionnellement le joint entre ouvrant et dormant est fixé sur le champ périphérique intérieur du dormant. Mais il est recommandé de mettre en place le joint le plus loin possible du plan extérieur du dormant à savoir du plan exposé aux intempéries, afin d'obtenir une chambre dite de décompression entre ouvrant et dormant. Pour éviter des dormants trop imposants et leur rainurage pour la pose du joint, il est donc devenu nécessaire de placer ce joint sur le champ extérieur périphérique du vantail. Les fabricants de fenêtre adoptent de plus en plus cette solution permettant d'obtenir des fenêtres plus performantes aux intempéries tout en économisant la matière première des vantaux et dormants et en gardant des sections courantes.

Le joint posé sur le champ extérieur du vantail peut être souple ou rigide, tout en n'étant jamais extrudé comme peut l'être le joint de vitrage. Dans le cas d'un joint rigide, sa pose se réalise manuellement sans trop de problème mais nécessite sa préparation pour sa coupe aux longueurs correspondantes à celles du châssis. Par contre, les joints souples qui présentent l'avantage d'un meilleur conditionnement, posent à leur application manuelle des problèmes importants : la pose est irrégulière et lente du fait de la difficulté d'introduction du joint dans la rainure et la main-d'oeuvre est donc coûteuse en regard du coût de revient final.

Selon l'état de la technique, le vantail à équiper de ses joints est posé sur un gabarit horizontal. Ce gabarit est muni de moyens manuels ou automatiques de serrage du vantail. Lorsque ce gabarit est immobile et fixé au sol, il est nécessaire de disposer d'un espace suffisant pour permettre à un ouvrier de poser, avec ou sans outil, le joint dans la rainure tout en se déplaçant autour du vantail ; si l'on ne peut pas se déplacer autour du vantail, à cause de l'agencement environnant des postes de travail, deux ouvriers sont alors nécessaires pour poser le joint de part et d'autre du gabarit. Lorsque le gabarit est mobile sur sa fixation au sol, l'espace de circulation est économisé et une personne seule peut alors, dans tous les cas, réaliser l'opération de pose ; mais en contre partie, ce type d'installation nécessite une infrastructure plus compliquée et sa mise en oeuvre est plus difficile. L'outil généralement utilisé par les poseurs de joint est une roulette manuelle ou une sorte de burin pneumatique.

D'autre part, le joint n'est pas toujours dévidé d'un rouleau stocké à proximité du gabarit et il est parfois pré-découpé, soit chez le menuisier, soit chez son fournisseur. Cette solution a le désavantage d'être très coûteuse et de plus d'augmenter les sources d'erreur.

Le pré-découpage des joints a conduit à la création de machines automatiques de découpe. Celles-ci permettent, outre la mise à longueur, le découpage déterminé des angles. Autrefois, on découpait le joint à chaque longueur des côtés du châssis et il y avait rupture du joint aux endroits des angles. Aujourd'hui, le joint pour un vantail peut être pré-découpé d'un seul tenant.

Il faut également remarquer que la tradition de la menuiserie industrielle voulait que l'équipement des vantaux s'effectue sur un cadre assemblé. De nos jours très souvent les traverses et les montants sont équipés de leur joint avant d'être assemblés. Cette solution permet de réaliser des chaînes de montage plus automatisées, les poses de joints pouvant s'effectuer linéairement en semi-automatique. Mais le joint est alors discontinu sur la périphérie du vantail assemblé.

La présente invention a pour but de remédier à ces inconvénients en proposant une machine comportant des moyens permettant la pose et la découpe simultanée d'un joint souple sur un vantail assemblé, l'ensemble de ces opérations étant totalement automatisé quels que soient les paramètres caractérisant le vantail (forme, longueur, section des traverses et montants, etc.). Elle est particulièrement remarquable dans le fait qu'elle regroupe sur une seule installation la pose et la coupe du joint, en ayant au préalable reconnu le type de vantail se présentant sur le poste, après avoir mesuré ces dimensions exactes et les avoir transmises au chariot de pose du joint. Il en résulte une augmentation importante de productivité et de flexibilité. Elle permet de plus une pose fiable et régulière du joint dans la rainure de vantail.

Elle est en particulier destinée à venir s'intégrer dans une installation générale pour la finition de vantaux. Elle se compose d'un mécanisme d'amenage, de mise en référence et de mesure du vantail, d'un portique au sol avec chariot à mouvements croisés, d'un dispositif de pose et de découpe du joint et d'un système de dévidage du joint en bobine. Elle permet la pose automatique du joint d'étanchéité sur trois ou quatre côtés du vantail ; l'amenage sur le poste, la mise en référence, la mesure des dimensions et l'identification des vantaux sont automatisés.

Conformément à l'invention, la machine pour la pose automatique de joint en particulier d'un joint extérieur dans une rainure de vantail de fenêtre ou de porte-fenêtre, comporte un mécanisme d'amenage, de mise en référence et de mesure du vantail, un portique support, un système de dévidage du joint, un système de bridage du vantail et un dispositif de pose et de découpe du joint ; ce dernier comprend un bâti, un portique mobile en translation sur ce bâti, un chariot mobile en translation sur ce portique ; la machine est remarquable en ce que ledit chariot mobile supporte une tête de manipulation rotative par rapport au chariot et comprenant des moyens de guidage et d'entraînement du joint, des moyens de coupe du joint et des moyens de pose du joint.

Selon un agencement préféré, la tête de manipulation comporte une partie fixe supportant les moyens de coupe et un bras articulé sur celle-ci supportant à son extrémité libre les moyens de pose du joint.

Selon une autre caractéristique de l'invention, les moyens de pose sont constitués d'un organe de pose venant en contact avec le bord externe du joint et le forçant à entrer dans la rainure du vantail, et un organe presseur destiné à presser le joint dans un sens perpendiculaire au sens d'introduction de celui-ci dans la rainure à proximité du chant du vantail.

De préférence, ledit organe de pose est un galet rotatif autour d'un axe sensiblement vertical solidaire du bras.

Selon un premier mode de réalisation, ledit organe presseur est un galet rotatif autour d'un axe sensiblement horizontal solidaire du bras et, selon un second mode de réalisation, ledit organe presseur est un doigt fixé au bras.

Ces organes presseurs sont adaptés pour coopérer avec l'organe de pose lorsque le vantail arrive à la machine, à l'état monté dépourvu de toute ferrure.

Or, il arrive qu'il soit nécessaire de mettre en place le joint d'étanchéité extérieur sur un vantail déjà pourvu de ferrures, telles que crémones, serrures ou analogues équipés en particulier d'éléments de verrouillage tels que galets ou analogues.

Dans ce cas, il faut donc que les organes de pose soient tels, qu'ils permettent la mise en place du joint extérieur dans la rainure de vantail, malgré ces ferrures qui forment des obstacles, la surface de référence formée par le chant du vantail n'étant plus plane longitudinalement. Il est indispensable également que la pose reste continue et automatique malgré l'existence de ces obstacles.

Pour ce faire, la présente invention préconise un troisième mode de réalisation de l'organe presseur, qui permette la pose continue du joint malgré les protubérances formées par les élément de ferrure, en particulier par les éléments de verrouillage.

Cet organe presseur coopère avec le galet de pose ; ce galet de pose lui, peut rester de façon continue en position de travail puisque son niveau et son épaisseur sont tels qu'il n'est jamais gêné par la présence des éléments de ferrures protubérants.

Par contre, selon cette variante, l'organe presseur est constitué d'un doigt mobile rétractable, lorsqu'un élément de ferrures protubérant est rencontré ; dans cette position, le galet de pose agit seul sur le joint pour permettre son insertion dans la rainure. Une fois l'élément de ferrure dépassé, un organe de commande déplace le doigt presseur vers l'extérieur, pour le remettre en position de travail à savoir en position de pression contre le joint.

Cette variante de l'organe presseur permet donc l'adaptation de la machine au cas où le joint extérieur est à mettre en place sur un vantail déjà équipé de ferrures, dont les éléments, en particulier les éléments de verrouillage, sont protubérants par rapport au chant du vantail. Bien évidemment, la machine équipée de ce doigt presseur peut également être utilisée dans le cas de vantaux non équipés de ferrures.

Si l'emplacement de ces éléments protubérants est connu précisément, l'organe de commande du doigt presseur est actionné à la côte paramétrée de ces éléments protubérants.

Si l'emplacement de ces éléments protubérants n'est pas connu précisément, lors du déplacement de la tête de pose, le doigt presseur mobile vient buter contre ces éléments protubérants qui le repoussent en position rétractée ; après passage d'un élément protubérant, le doigt presseur mobile est remis en position active, c'est-à-dire en pression contre le joint.

La machine conforme à l'invention présente également un mécanisme d'amenage et d'évacuation spécifique.

La combinaison d'une rive et d'au moins un doigt d'entraînement permet le positionnement précis du vantail sur la table de chargement.

Selon le mode préféré de l'invention, le mécanisme d'amenage et d'évacuation comporte deux doigts d'entraînement, montés ensemble pour effectuer un mouvement de va-et-vient synchronisé.

Le second doigt amène un vantail à équiper tandis que le premier évacue le vantail précédent équipé ; puis le second doigt évacue le vantail équipé ; ensuite par un déplacement dans le sens opposé, le premier doigt amène un autre vantail à équiper, tandis que le second doigt est en position d'attente. Ainsi, un gain de cadence est réalisé quant à l'amenage et à l'évacuation des vantaux.

Le positionnement du vantail sur le gabarit à partir de la table de chargement s'effectue avec ces doigts d'entraînement automatiques. Pour ce faire au travers d'un plan de transfert en aval de la machine constitué d'un tapis brosse par exemple, agissent ces doigts d'entraînement qui déplacent le vantail le long d'une rive solidaire de la table de chargement. Ensuite, de façon classique sont mis en oeuvre des moyens de calage et de maintien constitués de fourchettes de bridage montées sur des bandes de roulement mues par deux moteurs. Ces deux fourchettes de bridage constituent deux mouvements d'axes perpendiculaires avec des effets opposés aux doigts d'entraînement.

Compte tenu des efforts engendrés par les fourchettes de bridage, qui sont entraînées et supportées par l'intermédiaire d'une ou plusieurs poutres horizontales inférieures dans le châssis de la machine, ce système de bridage peut poser certains problèmes.

Compte tenu de l'inertie des poutres, ces efforts de bridage sont transmis aux vantaux et peuvent engendrer des déformations de ceux-ci. Ces déformations peuvent être internes, c'est-à-dire en particulier se produire aux emplacements des liaisons angulaires des montants et traverses du vantail bridé. Elles peuvent également être globales, c'est-à-dire que la structure du vantail peut se déformer, par exemple se soulever en un ou plusieurs de ses angles.

La présente invention se propose également de résoudre ces problèmes.

Pour ce faire, sont prévus sur le chariot des organes d'appui et de bridage du vantail.

Plus précisément un organe mobile d'appui vertical est prévu sur la partie fixe de la tête de manipulation, cet organe maintenant la planéité du vantail en appuyant sur la face supérieure du battant ; un organe d'appui ponctuel est quant à lui prévu sur le chariot.

Le premier organe, mobile, permet d'exercer une pression pratiquement continue sur la face supérieure du vantail, et ainsi d'assurer la planéité de celui-ci, le bridage décrit ci-dessus étant insuffisant pour remplir à lui seul cette fonction.

Aux angles du battant, où le système de fourchettes de bridage est insuffisant pour maintenir la planéité, le premier organe doit être escamoté pour permettre la rotation de la tête de manipulation. C'est pourquoi est donc prévu le second organe, d'appui ponctuel, qui dès l'enlèvement du premier organe mobile vient à son tour assurer un appui sur la face supérieure du vantail tout en permettant la rotation d'un quart de tour de la tête de manipulation.

Selon un mode de réalisation préféré, l'organe mobile comprend un galet rotatif selon un axe sensiblement horizontal.

L'organe d'appui ponctuel, quant à lui est de préférence constitué d'un vérin vertical dont la tige est pourvue à son extrémité d'un patin d'appui.

Par ailleurs, la machine est destinée à la pose automatique de joints sur un vantail de fenêtre ou de porte-fenêtre. Il est donc nécessaire de détecter lors de l'amenage sur la table de chargement, s'il s'agit d'une fenêtre ou d'une porte-fenêtre.

Pour ce faire, la machine conforme à l'invention comporte un perfectionnement très simple de reconnaissance agencé sur la table de chargement à une disposition adéquate pour être activée lors de la mise en place d'une porte fenêtre.

Pour réaliser ceci la table de chargement est équipée de moyens de détection des battants de porte-fenêtre.

De préférence ces dits moyens sont constitués de leviers faisant saillie hors de la table de chargement et rabattables par pression latérale, ces leviers actionnant un contacteur.

L'invention est exposée ci-après plus en détail à l'aide de dessins représentant seulement un mode d'exécution, dans lesquels :

- la figure 1 représente une vue partielle en coupe d'un dormant et d'un vantail pourvu d'un joint extérieur ;

- la figure 2 représente en perspective une vue générale du dispositif de pose et de découpe du joint ;

- la figure 3 est une vue de côté de la tête de manipulation, selon une première forme de réalisation.

- la figure 4 est une vue de l'autre côté de la tête de manipulation, selon cette première forme de réalisation ;

- la figure 5 est une vue de dessus partielle de la tête de manipulation, selon cette première forme de réalisation ;

- la figure 6 est une vue selon la coupe A-A de la tête de manipulation, selon cette première forme de réalisation ;

- la figure 7 est une vue de côté de la tête de manipulation selon une seconde forme de réalisation ;

- la figure 8 est une vue de l'autre côté de la tête de manipulation, selon cette seconde forme de réalisation ;

- la figure 9 est une vue de dessus partielle de la tête de manipulation, selon cette seconde forme de réalisation ;

- la figure 10 est une vue selon la coupe AA de la tête de manipulation, selon cette seconde forme de réalisation ;

- la figure 11 est une vue partielle de côté de la tête de manipulation, selon cette seconde forme de réalisation ;

- les figures 12, 13 et 14 sont des vues partielles de dessus de la tête de manipulation en fonctionnement à savoir respectivement avant rotation à un angle, en début de pose, et en pose courante, selon la seconde forme de réalisation ;

- la figure 15 est une vue partielle de devant de la tête de manipulation ; et

- la figure 16 est une vue selon la coupe B-B des moyens de pose agissant sur un joint extérieur de vantail, selon la seconde forme de réalisation ;

- La figure 17 est une vue de côté de la tête de manipulation, selon une troisième forme de réalisation de l'organe presseur,

- la figure 18 est une vue de dessus du doigt presseur, selon cette troisième forme de réalisation de l'organe presseur ;

- la figure 19 est une vue de côté du doigt presseur, selon cette troisième forme de réalisation de l'organe presseur ;

- la figure 20 est une vue partielle du dessus de la tête de manipulation, le doigt presseur étant en position rétractée, selon cette troisième forme de réalisation ;

- la figure 21 est une représentation schématique de la machine dans son ensemble.

- la figure 22 et la figure 23 sont des vues de face et de dessus, du mécanisme de positionnement dans le plan de défilement.

- les figures 24 et 25 sont des vues de face et de dessus, du mécanisme de calage et de maintien dans le plan d'exécution.

- la figure 26 est une vue de côté de la tête de manipulation conforme à l'invention, destinée à représenter plus précisément les organes d'appui et de bridage équipant le chariot ;

- la figure 27 est une vue en coupe selon la ligne K-K de l'organe d'appui mobile ;

- la figure 28 est une vue selon F de l'organe d'appui mobile ;

- la figure 29 est une vue de côté de l'organe d'appui ponctuel.

Comme on peut le voir sur la figure le vantail B est pourvu sur son côté externe à savoir sur son côté tourné vers le châssis dormant A d'une rainure dans laquelle vient se mettre en place le joint d'étanchéité externe C dont il est question dans la suite de la description.

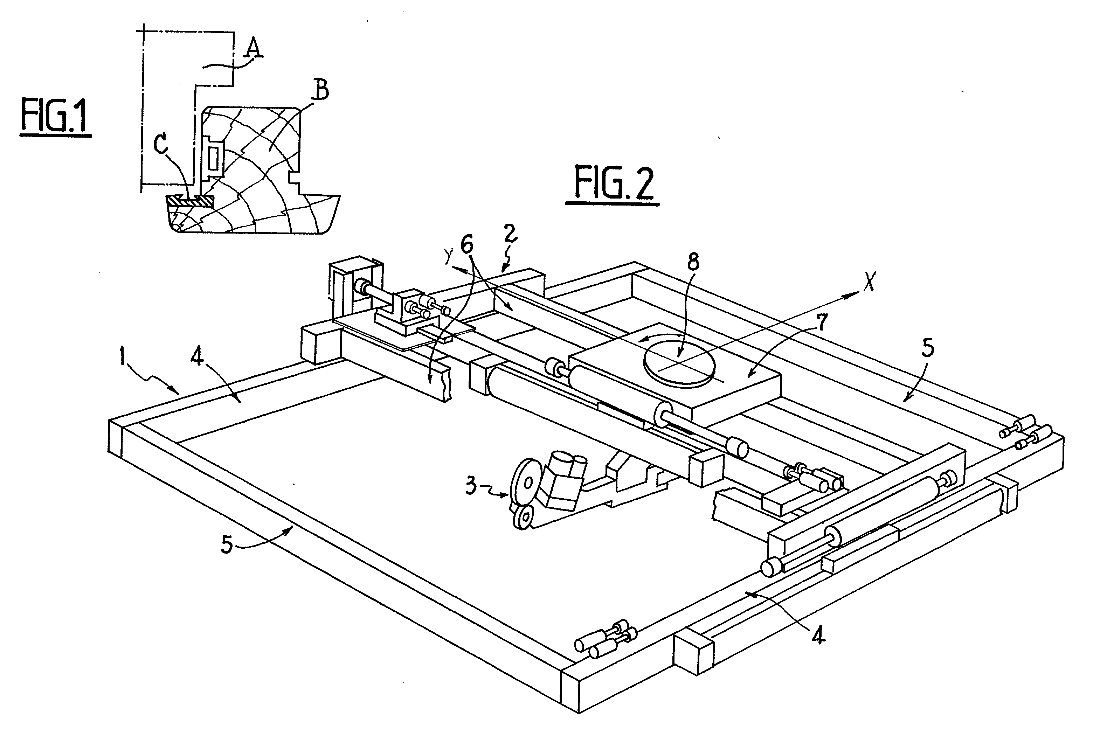

Tel qu'il est représenté sur la figure 2 le dispositif de pose et de découpe du joint comprend un bâti 1 recevant un portique 2. Ce portique 2 assure, de manière connue en soi, des mouvements croisés pour permettre des opérations à partir d'une tête de manipulation 3. Pour ce faire, le bâti 1 a la forme d'une ossature fixée au sol et comporte sur sa partie supérieure deux rails longitudinaux parallèles 4 servant de chemin de roulement et constituant l'axe X de déplacement d'une poutre. Cette poutre constitue le portique 2. Des galets à billes permettent son déplacement sur les rails du bâti. Le portique est accroché par des pinces sur des courroies crantées parallèles, situées le long des rails, courroies qui sont entraînées par deux poulies montées sur un arbre dont les paliers sont fixés sur une traverse 5 du bâti 1 et dont la rotation est assurée par un moto-réducteur à courant continu avec variateur et codeur pour le déplacement de la poutre. Deux poulies folles situées sur la traverse opposée du bâti permettent le retour des courroies et d'ajuster leur tension.

Ces moyens, connus en soi, d'asservissement en déplacement et en vitesse du portique 2 peuvent bien entendu être remplacés par d'autres moyens par exemple pneumatiques ou analogues assurant les mêmes effets.

Le portique 2 est lui même constitué de deux rails 6 parallèles perpendiculaires au sens de déplacement du portique et plus particulièrement perpendiculaires aux deux rails 4 du bâti 1. Ces deux rails 6 constituent l'axe de déplacement Y d'un chariot 7 support de la tête de manipulation 3. Le chariot 7, tout comme le portique 2 sur les rails 4 du bâti 1, est fixé par des pinces sur des courroies parallèles aux rails du portique 2. Ces courroies sont entraînées par des poulies. Un moto-réducteur fixé sur le portique entraîne ces courroies dont le déplacement et la vitesse sont contrôlés par des codeurs et variateurs.

Le bâti 1 et le portique 2 ainsi que leurs moyens de déplacement sont des moyens connus en soi, par contre il est à remarquer que leurs déplacements X et Y sont mis à profit pour approvisionner le joint.

Ce bâti et ce portique sont pourvus de moyens automatiques de pose et de découpe du joint, moyens maintenant décrits plus précisément.

Le chariot 7 est pourvu en son centre d'un fût 8 vertical tournant, entraîné en rotation par un moto-réducteur à axe vertical et transmission par chaîne. Ce fût vertical 8 reçoit en partie basse la tête 3 de pose ou de manipulation du joint, tandis que son ouverture centrale permet le passage des câbles ou tuyaux d'alimentation de la tête de pose et de ses accessoires ainsi que le passage du joint. La rotation du fût 8 comporte quatre positions d'arrêt à 90° correspondant aux quatre côtés du châssis de fenêtre. La rotation est limitée à 360° avec un retour à la position centrale à chaque changement de châssis pour limiter la torsion des câbles, tuyaux et joint passant à travers le fût. Ce mode de fonctionnement, bien entendu, n'est pas limitatif, puisque la position du fût peut être programmée pour réaliser l'équipement de vantaux de formes parallélépipédiques diverses ou même de vantaux ronds ou de n'importe quelle forme.

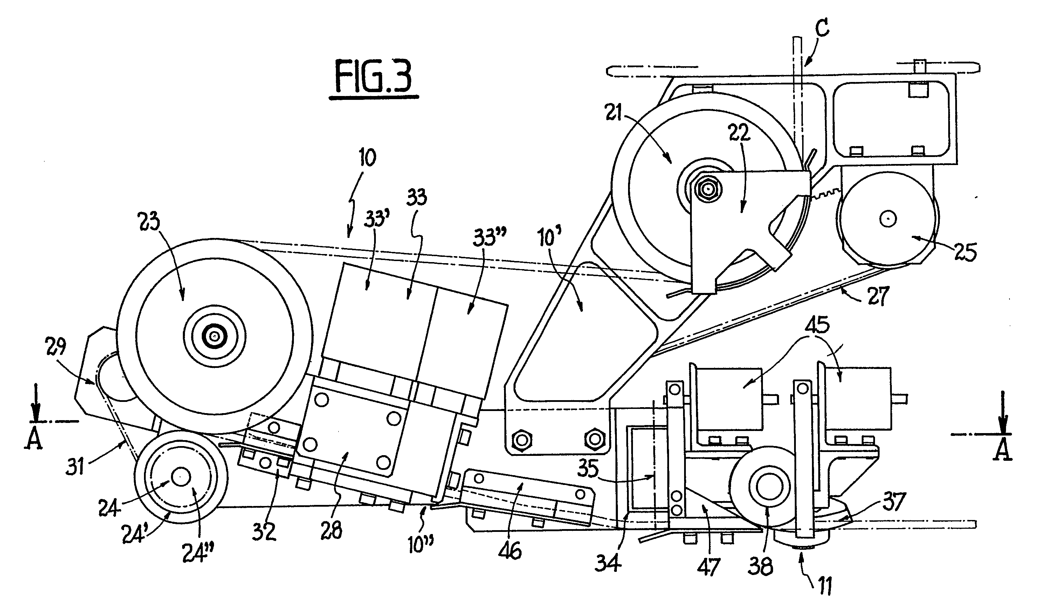

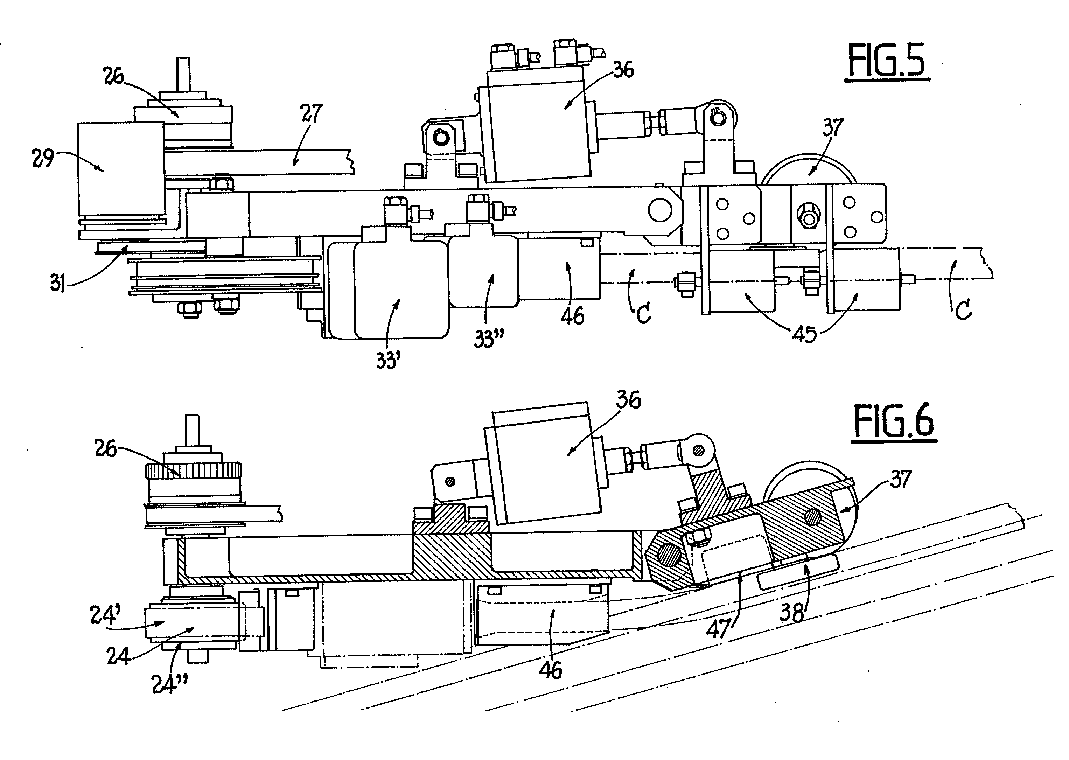

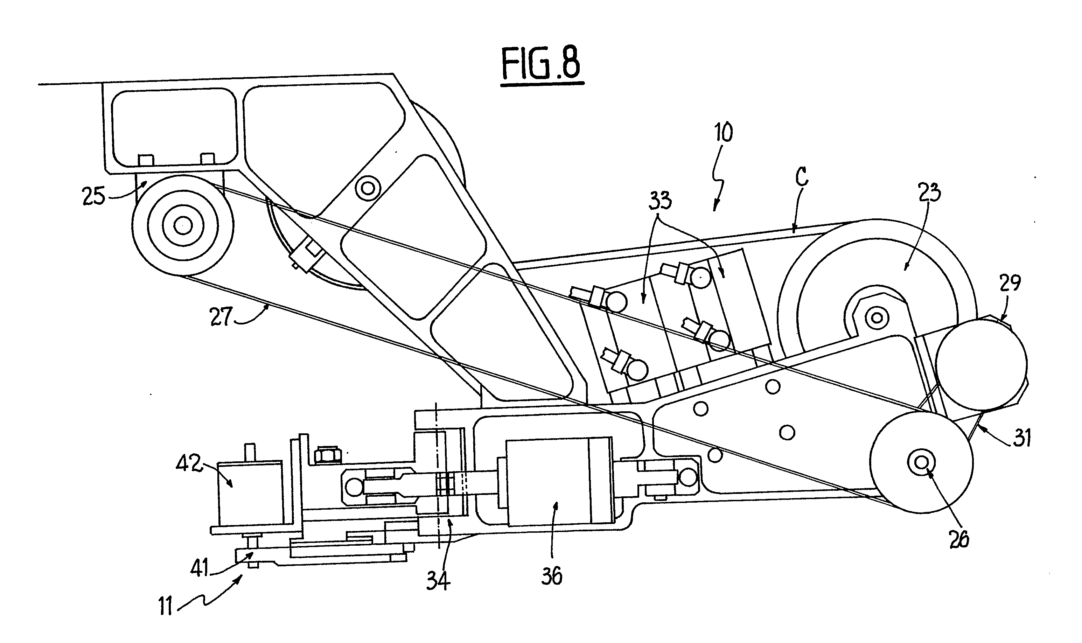

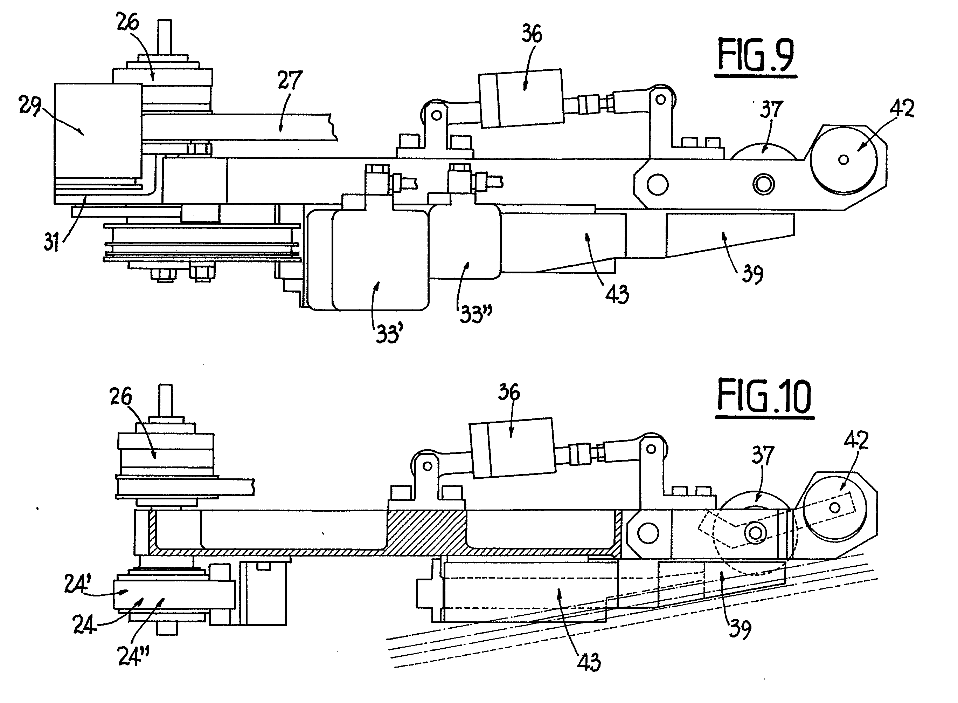

La tête de manipulation 3 quant à elle est fixée par vissage ou analogue sur l'épaisseur de la paroi du fût 8 et se situe sous le chariot 7 du portique 2. Elle va maintenant être décrite plus précisément en référence aux figures 3 à 20.

La tête de manipulation 3 se compose d'une partie fixe 10 supportant les éléments d'approvisionnement et de découpe du joint et d'un bras 11 articulé sur la partie fixe 10 et supportant les éléments de mise en place du joint. La partie fixe 10 est constituée d'un support en alliage léger ou analogue, réalisé en deux parties 10' et 10''. A la partie supérieure de la première partie 10' elle supporte une poulie folle 21 servant au guidage du joint C qui arrive verticalement à travers la lumière du fût 8 tournant du chariot ; la poulie folle 21 comporte un guide 22 solidaire de l'axe de la poulie 21 et de la partie fixe de la tête de pose et retenant le joint C sur la poulie ; à une extrémité de la seconde partie 10'' de la partie fixe, celle-ci supporte une poulie de renvoi 23 montée sur un axe excentré pour le réglage de la pression du joint C sur un galet 24 élastique d'entraînement ; ce galet 24 est constitué d'un manchon élastique 24', serré entre deux flasques métalliques 24'' et monté sur l'axe d'entraînement à l'aide de bagues biconiques.

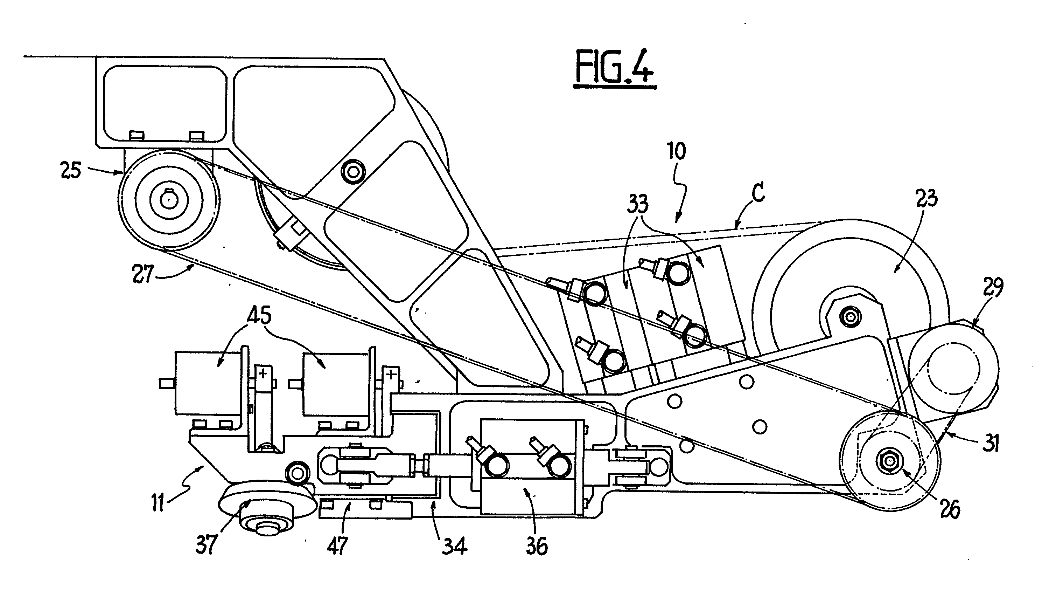

Un moteur à vitesse variable 25 suspendu sous la partie fixe 10 entraîne, par l'intermédiaire d'une courroie crantée 27, un limiteur de couple 26 réglable monté sur l'autre extrémité de l'axe du galet 24 d'entraînement ; ce limiteur de couple 26 magnétique autorise par glissement, des écarts relatifs de vitesse entre le moteur 25 et l'avance du joint C qui se trouve immobilisé lors de la descente des lames de cisailles d'un bloc de coupe 28 ou lors d'immobilisation accidentelle ; le mouvement du galet 24 et par conséquent l'avance du joint C est contrôlé par un vérin 29 solidaire de la partie fixe 10 ; ce vérin 29 est relié par une courroie 31 crantée à une poulie solidaire de l'arbre du galet 24 d'entraînement, comme on peut le voir sur les figures 3 et 4.

A la sortie du galet d'entraînement 24, un dispositif de guidage 32 en forme de tunnel assure la continuité du guidage jusqu'au bloc de cisaillage ou bloc de coupe 28 qui comporte deux lames de coupe dont l'une sert à l'entaillage du joint correspondant aux angles du châssis, et dont l'autre est droite pour le début et la fin du programme de pose. Des vérins à double effet assurent les fonctions des lames ; le bloc de coupe 28 réunit donc des vérins à double effet 33 activant respectivement une lame pour la coupe angulaire 33' et une lame pour la coupe droite 33''.

A l'autre extrémité de la seconde partie 10'' de la partie fixe 10, une chape 34 supporte par l'intermédiaire d'un axe vertical 35 le bras articulé 11 assurant la pose du joint C dans la feuillure du châssis.

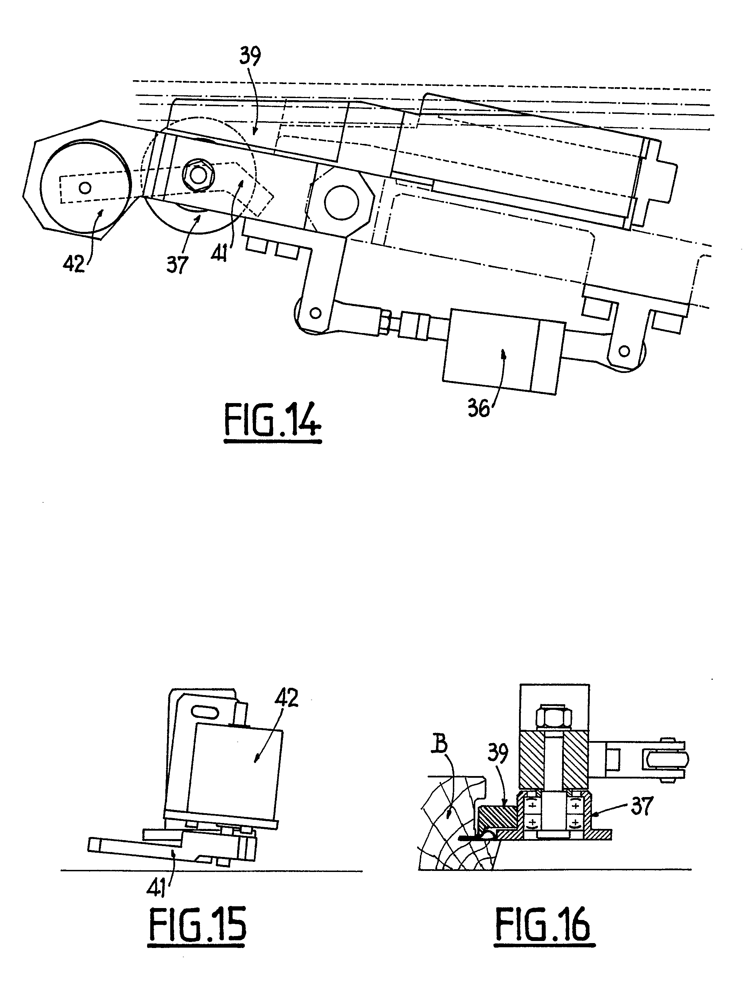

Ce bras 11 supporte un galet 37 à axe sensiblement vertical dont la joue vient en contact du bord externe du joint C au-dessus du plan de pose de celui-ci et force le talon du joint C à entrer dans la rainure du vantail (figure 16).

Le bras mobile 11 est orienté à l'aide d'un vérin 36 pneumatique à double effet, fixé à l'une de ses extrémités sur la partie fixe 10 et à son autre extrémité sur le bras mobile 11 ; lorsque la tige du vérin 36 est rentrée, le bras mobile 11 est écarté du vantail de la fenêtre et le galet de pose 37 n'est plus en contact avec le joint ; quand le vérin 36 est activé, le bras mobile 11 se rapproche du vantail et le galet de pose 37 pousse le joint dans la feuillure avec un effort variable selon la pression admise dans le vérin 36. A mi-course, le bras 11 est aligné avec la partie fixe 10 et le galet de pose 37 est tangent aux bords extérieurs du vantail ; c'est la position zéro avant tout démarrage de pose du joint proprement dite ; puis cette position est appelée à varier pour compenser les défauts de fabrication et de positionnement du vantail ; le vérin 36 se comporte alors comme un ressort pneumatique appuyant sur le galet de pose 37.

Il va de soi que la commande du bras mobile 11 n'est nullement limitée à cette forme de réalisation préférée.

Coopérant avec le galet 37, pour permettre l'introduction du joint C dans la rainure du vantail est mis en place un organe presseur 38, 39, destiné à presser le joint dans un sens perpendiculaire à son sens d'introduction dans la rainure.

Selon une première forme de réalisation, l'organe presseur est constitué par un galet de pression 38 monté sur un axe horizontal solidaire du bras mobile 11 (voir figure 3 à 6). Dans ce cas à la sortie du bloc de coupe 28 sur le bras mobile 11 sont prévus des tunnels de guidage 46 et 47, dont le plus en aval par rapport au sens de déplacement du joint 47 joue également le rôle de guidage repère, tel que le guidage 43 décrit plus loin.

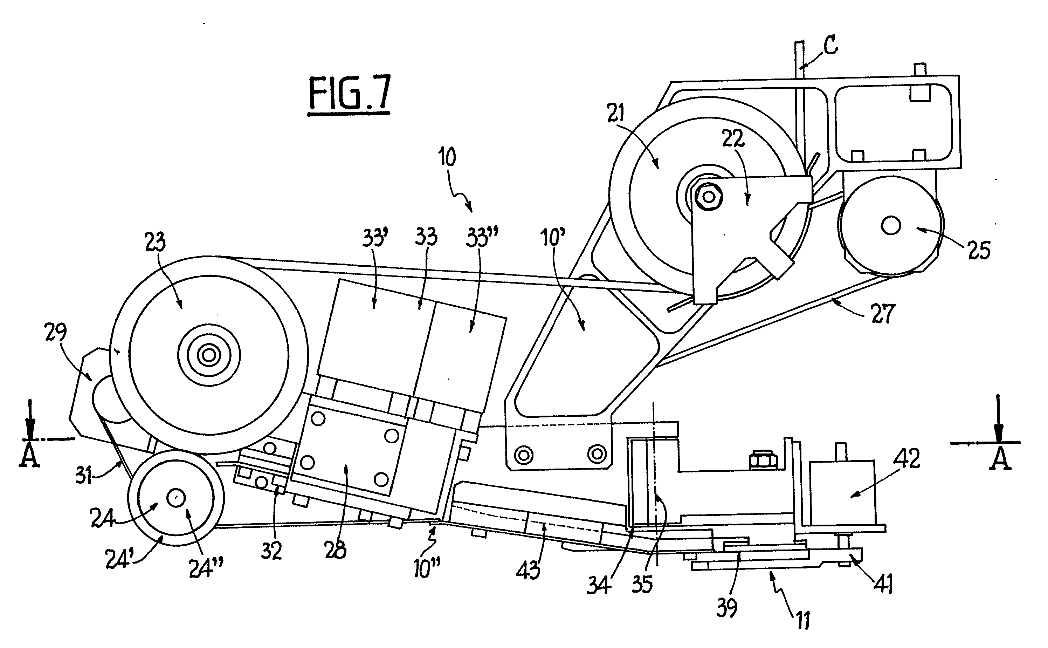

Selon un second mode de réalisation cet organe presseur est constitué par un doigt 39 fixé à l'extrémité du guidage repère 43 tel qu'il est représenté sur les figures 7 à 16. Comme on le voit plus précisément sur la figure 16 ce doigt comporte une partie en saillie dirigée vers le bas qui vient appuyer sur le talon du joint en s'intercalant entre le fond de feuillure et le bourrelet du joint.

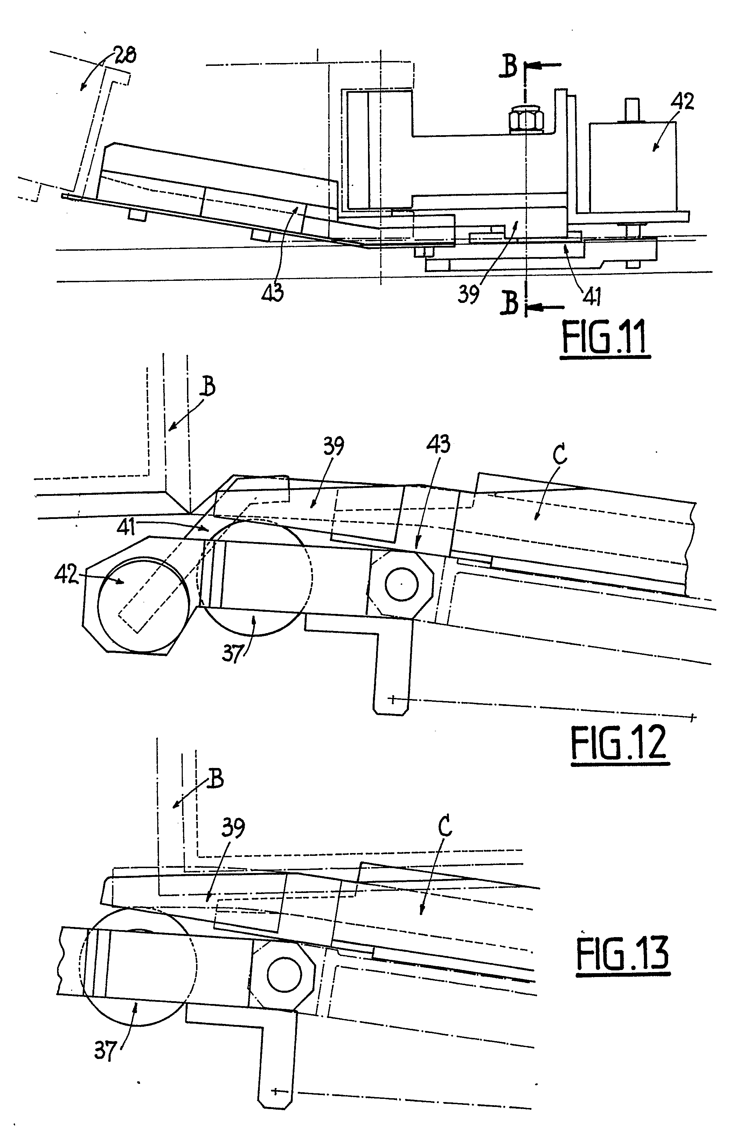

Dans ce dernier cas, à l'extrémité du bras articulé 11, un doigt 41 est monté sur l'axe d'un vérin rotatif 42 incliné par rapport à la verticale (figure 15). Ce doigt 41 est utilisé à chaque angle de fenêtre pour soutenir la partie du joint C qui se trouve à ce moment là à l'extérieur du vantail lors de la rotation de la tête de manipulation 3 (figure 12). Ce soutien est effectué avant ladite rotation du fût 8 tournant du chariot 7. L'inclinaison de l'axe du vérin 42 (figure 15) est fixe et provoque un balayage du doigt 41 mobile dans un plan non parallèle au plan de pose, de sorte qu'il soulève le joint C au-dessus de ce dernier pendant la rotation et évite ainsi de coincer le joint C entre le vantail et le galet de pose 37 en fin de rotation. Tout comme le vérin 36 d'articulation du bras mobile 11, le vérin rotatif 42 du doigt mobile 41 fait fonction de ressort par exemple lorsque ce dernier est en butée sur la feuillure du vantail pour compenser certaines inégalités.

Un guidage repère 43 est prévu à la sortie du bloc de coupe 28 pour assurer le bon positionnement du joint C à la sortie du bloc de coupe 28 jusqu'au galet de pose 37. Son extrémité située au-dessus du doigt mobile 41 pendant la rotation de la tête de pose 3 à l'angle du vantail, assure le maintien efficace du joint C en porte à faux au cours de cette rotation. Il permet également le bon défilement du joint C sur le plan de pose et assure le bon placement du talon du joint devant la rainure dans la rainure du vantail.

Des vérins 45 (figures 3 à 6) ou le vérin 29 (figures 7 à 9) sont prévus afin de permettre le début de pose au droit d'un angle de vantail ou à une distance pré-déterminée de cet angle sur la traverse ou le montant du vantail. Ce dernier cas est le plus aisé et le plus courant puisque l'on a alors une coupe droite du joint au démarrage et à la fin du programme et entre ceux-ci quatre coupes angulaires effectuées de façon pré-déterminée, à partir de la saisie automatique des caractéristiques du vantail. Par contre, le premier cas selon lequel la pose débute au niveau d'un angle nécessite une coupe biaisée du joint pour le démarrage de la pose au droit de l'angle suivie de trois coupes angulaires et terminée par une coupe biaisée inverse à celle du départ ; ces coupes biaisées sont effectuées par le bloc de coupe angulaire et le bloc de coupe droite après paramétrage du décalage égal à une distance entre l'entraxe et des cisailles. Dans ce dernier cas il est possible également d'équiper uniquement les trois côtés d'un vantail pour certaines conditions particulières ; les coupes de début et de fin restent alors droites et seules deux coupes angulaires sont nécessaires.

Ces possibilités ne se limitent nullement à des châssis rectangulaires, puisque tous les paramètres peuvent être suivis automatiquement, provoquant la coordination de l'ensemble des fonctions par l'intermédiaire des codeurs

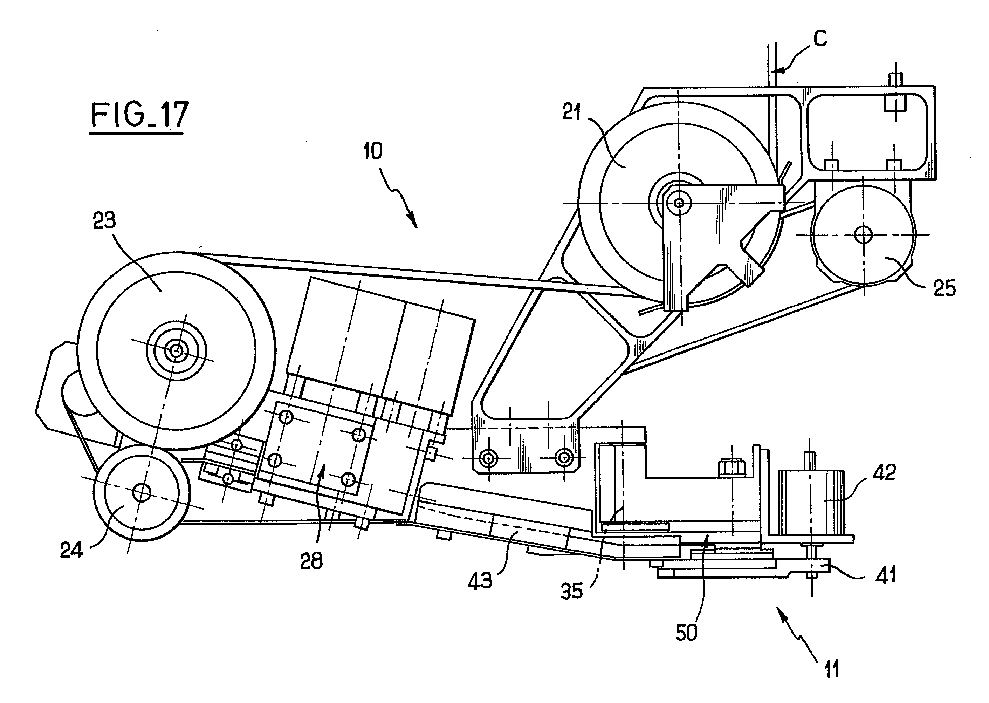

La troisième forme de réalisation de l'organe presseur va maintenant être décrite en référence aux figures 17 à 20, forme de réalisation destinée en particulier au traitement de vantaux déjà pourvus de ferrures.

Comme on peut le voir sur la figure 17, à l'extrémité libre de la partie mobile 11 du bras de manipulation, est monté un doigt mobile 41 solidaire d'un vérin rotatif 42, incliné par rapport à la verticale, ce doigt étant destiné à soutenir le joint, à l'extérieur du vantail, lors de la rotation de la tête, à chaque angle ouvrant.

Enfin un guidage repère 43 est placé à proximité de l'articulation du bras mobile ce guidage étant placé et formé pour assurer le positionnement du joint dans la rainure du vantail.

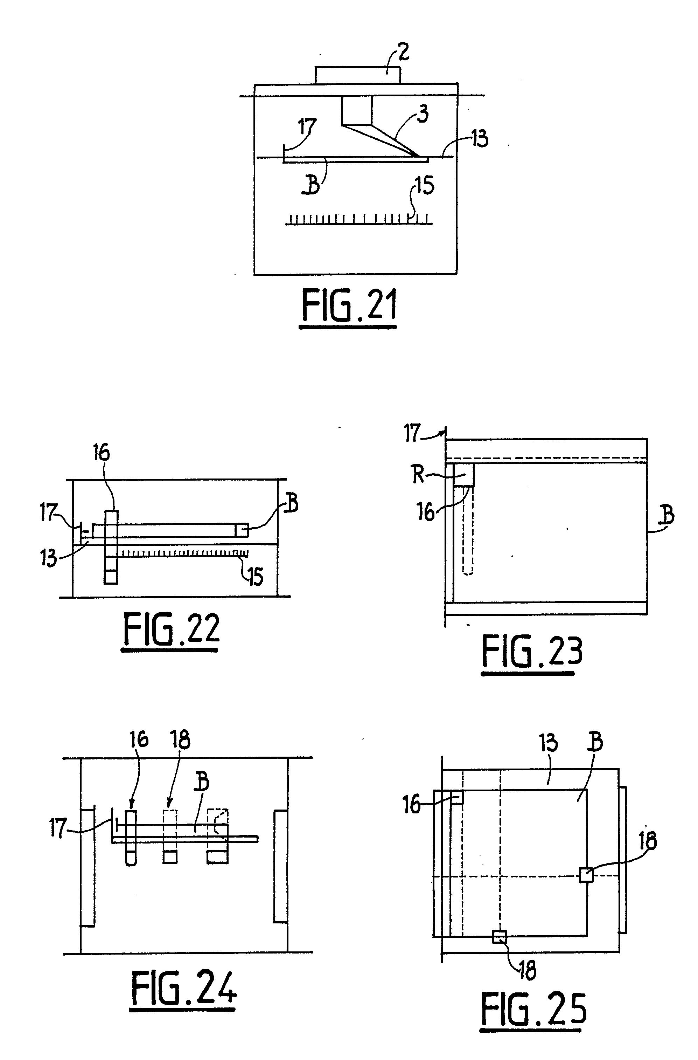

Le doigt presseur mobile 50 va maintenant être décrit précisément en référence aux figures 23, 24 et 25.

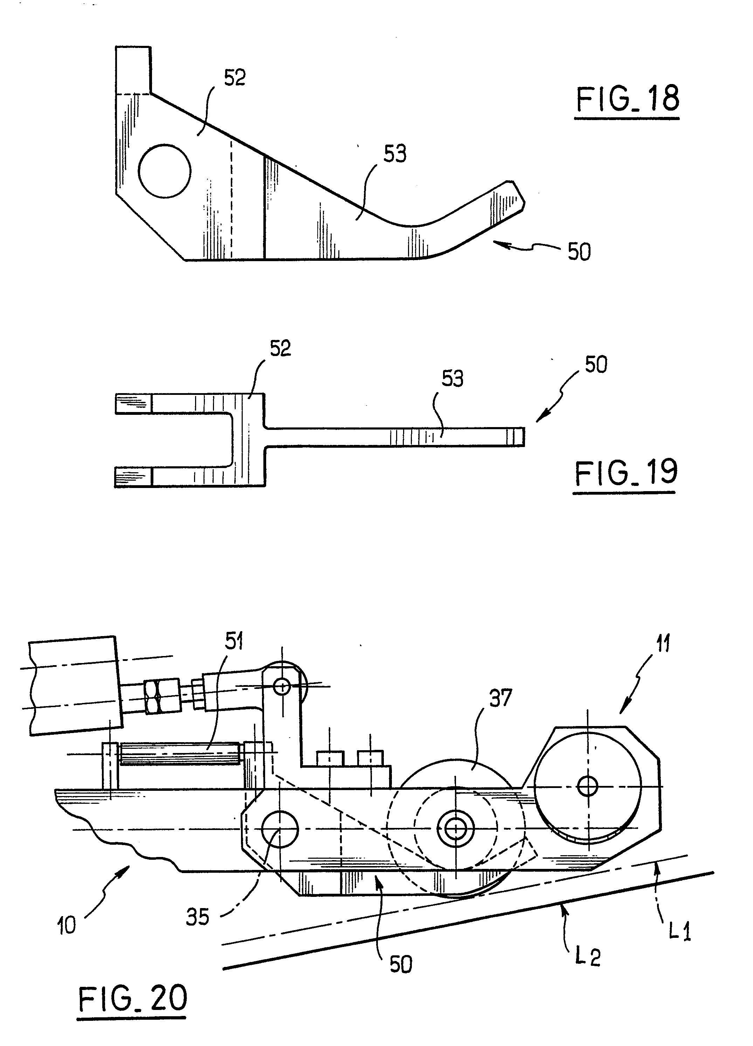

Comme on peut le voir sur les figures 18 et 19 il est essentiellement constitué d'une partie en forme de chape 52 et d'une partie de pression 53. Cette dernière partie 53 est formée pour venir appuyer sur le talon du joint en s'intercalant entre le fond de feuillure et le bourrelet du joint.

Comme on peut le voir sur la figure 20, en position rétractée, le doigt presseur vient reposer contre la partie supérieure du galet de pose 37, partie supérieure de diamètre inférieur à celui de la partie active du galet 37.

Le doigt presseur est monté pivotant sur l'axe 35 de pivotement de la partie mobile 11 de la tête de manipulation. Le doigt 50 est commandé par le vérin 51 monté d'une part sur la partie fixe 10 du bras de manipulation et d'autre part sur la branche supérieure de la partie de chape 52 du doigt 50.

En position rétractée, le doigt 50 occupe donc la position représentée sur la figure 20 et en position active de pression, il est pivoté vers l'extérieur afin que son extrémité repose verticalement sur le fond de feuillure schématisé par la ligne L2. Le galet de pose 37, quant à lui reste continuellement en position active, c'est-à-dire venant en contact avec le bord externe du joint C schématisé par la ligne L1.

Par ailleurs, le doigt 50 coopère avec le doigt mobile 41, à chaque angle de fenêtre pour soutenir la partie du joint C qui se trouve à ce moment là à l'extérieur du vantail lors de la rotation de la tête de manipulation. Tandis que l'inclinaison de l'axe du vérin 42 provoque un balayage du doigt 41 dans un plan non parallèle au plan de pose, le doigt 50 retient le joint C en position horizontale, parallèlement au plan général du vantail, évitant ainsi sa torsion à proximité de sa partie de coin éventuellement découpée en biseau.

La machine de pose de joint complète conforme à l'invention va maintenant être décrite à l'aide des figures 21 à 25. Elle se compose :
- d'un mécanisme d'amenage, de mise en référence et de mesure du vantail,
- d'un portique au sol,
- du dispositif de pose et de découpe déjà décrit, et
d'un système de dévidage du joint en bobine.

Les moyens d'approvisionnement des vantaux et les moyens de dégagement de ceux-ci sur d'autres unités de travail sont des éléments classiques tels que bandes transporteuses du type tapis, etc. Ces moyens d'approvisionnement ainsi que la table de chargement 13 ou gabarit se trouve sur un plan parallèle au plan du portique 2. Le sens du défilement des produits sera identique au sens de déplacement de ce portique.

Le mécanisme d'amenage, de mise en référence et de mesure du vantail va maintenant être décrit plus précisément.

Il se présente sous forme d'un convoyeur à bandes muni d'au moins un doigt d'entraînement du vantail ; une table de chargement ou élévateur 13 permet la prise en charge du vantail sur le poste et sa mise en référence verticale.

Le positionnement du vantail B sur le gabarit à partir de la table de chargement 13 s'effectuera avec au moins un doigt d'entraînement automatique. A cet effet, au travers d'un plan de transfert en aval de la machine, constituée d'un tapis brosse 15 par exemple, selon l'exemple représenté, agira un doigt d'entraînement 16 qui déplacera le vantail B le long d'une rive 17 solidaire de la table de chargement. Avantageusement, la combinaison rive et doigt d'entraînement évite la mise en travers du vantail sur la table de chargement 13 lors de son positionnement.

En fonctionnement, le tapis brosse 15 amène le vantail B devant la table de chargement 13. Un automatisme provoque l'actionnement du doigt de commande 16 qui vient se positionner à l'intérieur du vantail B sur l'un des angles internes de ce vantail. Cet angle de référence R est toujours celui situé en amont du sens du défilement et situé près de la rive 17 de la table de chargement, de sorte que le doigt d'entraînement 16, en s'inscrivant dans cet angle, plaque un des côtés du vantail sur la rive 17 de la table de chargement 13 et conduira le vantail 14 avec le tapis brosse 15 le long de cette dernière. Un automatisme arrêtera le mouvement sur un plan théorique d'arrêt commun pour tous types de vantaux. L'angle de référence R correspond à l'angle virtuel formé par la rive 17 et ce plan d'arrêt. Cette position initiale permet la mise en oeuvre des moyens de calage et de maintien qui suivis par des codeurs détermineront les caractéristiques des vantaux. Il faut noter également qu'à cette étape, le vantail B se trouve positionné sur des moyens d'élévation du gabarit, à savoir ceux de la table de chargement 13, dans un plan dit d'exécution, qui lui est également prédéterminé. Ces moyens d'élévation n'agissent qu'après la mise en oeuvre des moyens de calage et de maintien.

Ces moyens de calage et de maintien sont des fourchettes de bridage montées sur des bandes de roulement mues par deux moteurs. La bande est équipée de dispositifs de contact qui bride le vantail B sur la table de chargement 13 par rapport à l'angle de référence R ou par rapport à la rive 17 et au plan d'arrêt. Les deux fourchettes de bridage 18 constituent deux mouvements d'axe X et Y avec des effets opposés au doigt d'entraînement 16. Avantageusement dans le cas de grands vantaux, les brides de type fourchettes permettent de supprimer le voilage du vantail sur la table de chargement 13.

La position de démarrage de cycle est obtenue en déplaçant la table de chargement 13 du plan de défilement dans le plan d'exécution par des moyens classiques tels que vérins ou analogues. Lorsque le programme de pose du joint est terminé, la tête de pose 3 est retirée grâce à son vérin et la table de chargement 13 est ramenée au niveau du plan des moyens d'approvisionnement. Après retrait des fourchettes 18 de bridage et du doigt d'entraînement 16, le tapis 15 déplacera le vantail B équipé de son joint vers une autre unité de travail. Simultanément un autre vantail se présente en aval devant la table de chargement 13.

Selon le mode préféré de l'invention, le mécanisme d'amenage et d'évacuation comporte deux doigts d'entraînement, montés ensemble pour effectuer un mouvement de va-et-vient synchronisé.

Le second doigt amène un vantail à équiper tandis que le premier évacue le vantail précédent équipé ; puis le second doigt évacue le vantail équipé ; ensuite par un déplacement dans le sens opposé, le premier doigt amène un autre vantail à équiper, tandis que le second doigt est en position d'attente. Ainsi, un gain de cadence est réalisé quant à l'amenage et à l'évacuation des vantaux.

D'autre part le dispositif de pose et de découpe est monté sur un portique au sol qui est du type mécano-soudé et qui supporte les rails de guidage du portique 2 se déplaçant par exemple sur deux mètres et demi par l'intermédiaire du système d'entraînement déjà décrit ; le chariot 7 quant à lui peut se déplacer par exemple sur un mètre environ. Ce portique au sol supporte le mécanisme d'amenage et de mise en référence du vantail.

Enfin, le système de dévidage du joint est un support de bobine de joint monté à côté de l'installation ou sur le flanc du bâti de l'installation. Il est muni d'un frein pour éviter l'emballement de la bobine pendant le dévidage. Une détection de fin de bobine avertit l'opérateur du changement de bobine à effectuer. Selon un autre mode de réalisation seuls des guidages du joint se trouvent à proximité du dispositif automatique de pose et de découpe. Il est à noter que le déplacement X du portique 2 est mis à profit pour approvisionner le joint dont l'une des extrémités est retenue par la tête de manipulation 3.

Le chariot est également équipé directement d'organe d'appui et de bridage du vantail. Ces organes consistent en un organe d'appui mobile mis en place sur la tête de manipulation et d'un organe d'appui ponctuel supporté directement par le chariot.

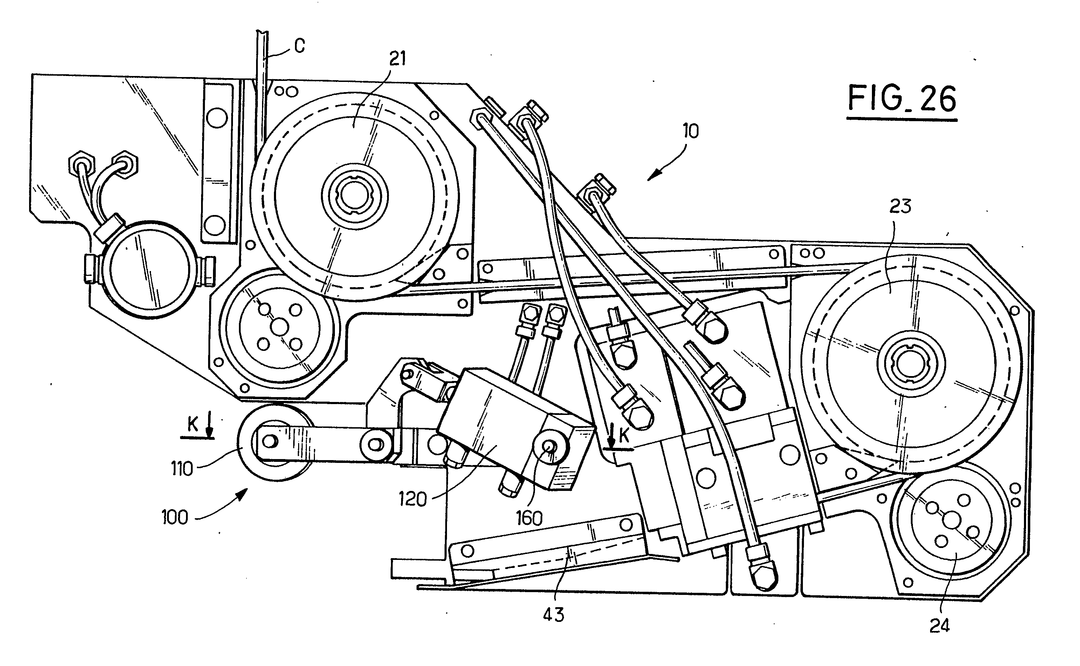

Comme on peut le voir sur la figure 26, sur la partie fixe 10 de la tête de manipulation est fixé, l'organe 100 d'appui mobile. Cet organe est constitué principalement d'un galet rotatif 110 actionné par un vérin 120.

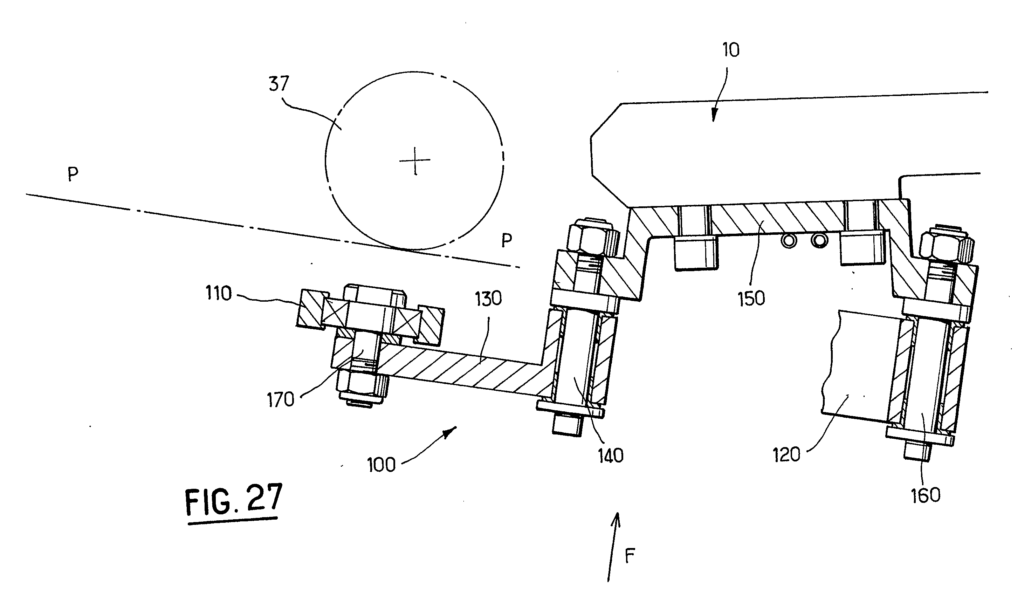

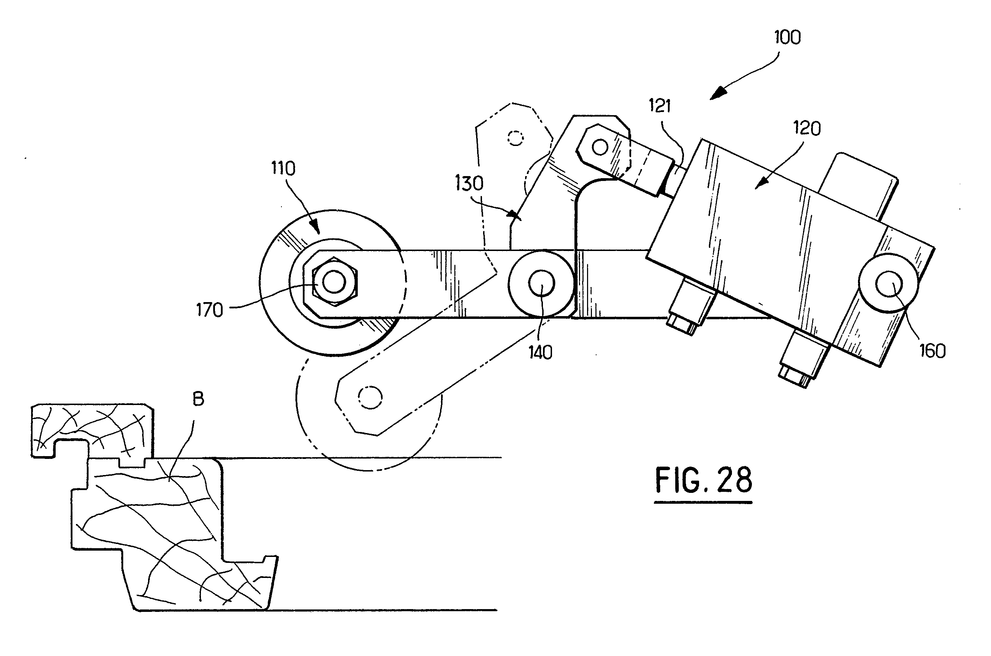

Cet organe 100 va maintenant être décrit plus précisément en référence aux figures 27 et 28.

Boulonné sur la partie support fixe 10 de la tête de manipulation, un élément en forme de oméga 150 supporte l'organe d'appui mobile 100. Par une de ses branches cet élément 150 supporte par l'intermédiaire d'une articulation rotative 160 le vérin d'actionnement 120 et par l'autre de ses branches l'élément 150 supporte par une articulation rotative 140 un bras coudé 130.

A l'extrémité extérieure de ce bras coudé est monté de façon fixe en 170 le galet d'appui mobile 110 monté sur son axe fixe en rotation grâce à un roulement à billes.

Sur cette figure 27, l'on peut voir également le bord du vantail représenté par la ligne en trait mixte PP ainsi que la position du galet de pose 37 du bras mobile de la tête de manipulation. L'agencement du bras coudé 130 et le déplacement du galet 110 de sa position de repos représentée en trait plein à sa position active représentée en trait mixte est particulièrement visible sur la figure 3.

L'extrémité extérieure du bras coudé 130 supporte donc le galet d'appui 110, son autre extrémité étant montée de façon rotative à l'extrémité de la tige 121 du vérin 120. Le coude du bras coudé 130 est quant à lui relié de façon rotative par l'articulation 140 sur une des branches de l'élément 150 en oméga.

On peut donc facilement comprendre le fonctionnement de l'organe d'appui mobile 110. Par rapport à la figure 28 l'actionnement du vérin, en sortant la tige de vérin 121, entraîne l'abaissement du galet d'appui 110 sur la face supérieure du vantail B. En même temps que se déplace la tête de manipulation, le galet 110 roule sur le vantail B en exerçant une pression suffisante sur celui-ci. L'actionnement inverse amène le galet 110 de sa position active à sa position de repos.

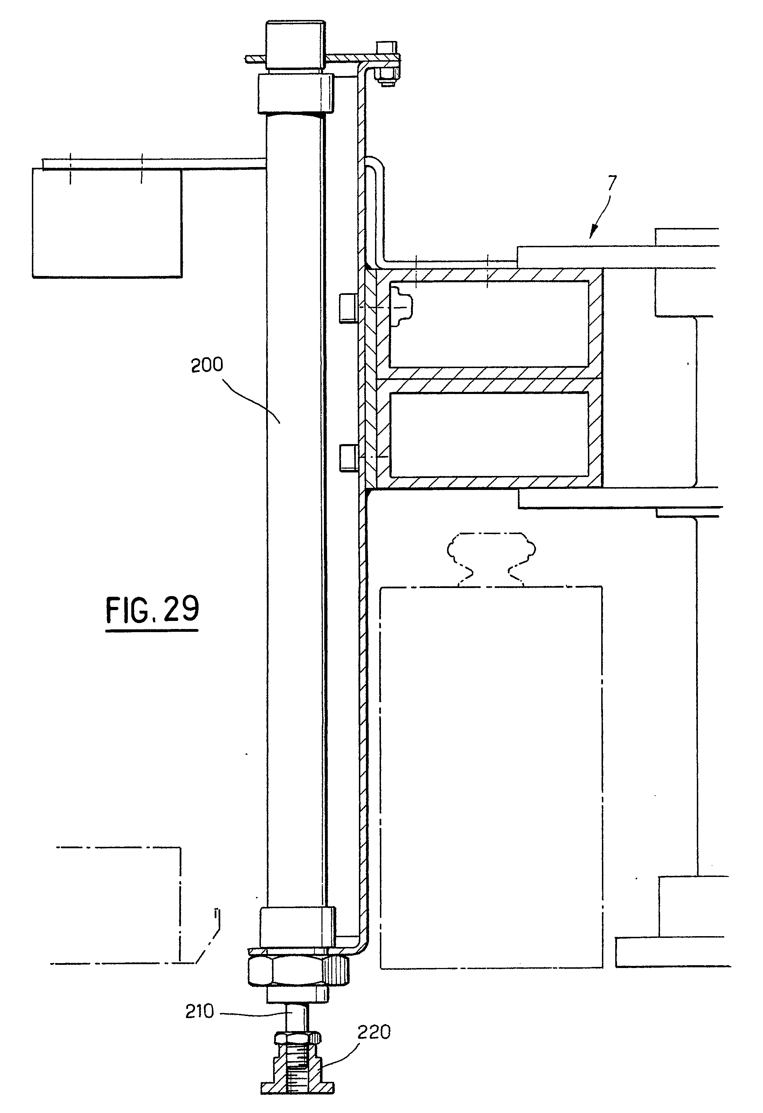

La figure 29 représente l'organe d'appui ponctuel, dont le fonctionnement est complémentaire à celui du galet mobile 110.

Le vérin 200 est donc fixé de façon verticale sur un bord du chariot 7. L'extrémité inférieure de sa tige 210 est filetée et reçoit le patin d'appui 220 dont la hauteur est réglable grâce à un écrou.

Pour réaliser la rotation de la tête de manipulation à l'un ou à plusieurs des angles du vantail B, il est nécessaire d'escamoter le galet d'appui 110 dans la position représentée en trait plein sur la figure 3. A ce moment est commandé le vérin d'appui ponctuel 200 qui remplace alors le galet 110 pour exercer la pression de bridage nécessaire sur le battant B. Après rotation d'un quart de tour de la tête de manipulation, le vérin 200 est escamoté et le galet 110 remis en position active.

Enfin, la machine pour la pose automatique de joints est également équipée de moyens de détection des battants de porte-fenêtre.

Selon un agencement préféré, ces moyens de détection sont constitués de leviers faisant saillie hors de la table de chargement à l'état inactif et rabattables par pression latérale. Ces ou ce levier(s) sont disposés sur la table de chargement de telle sorte que lorsqu'un battant de fenêtre est mis en place il ne forme pas un obstacle à celui-ci et ne sont donc pas rabattus. Par contre lorsqu'un battant de porte-fenêtre est mis en place ce battant bute sur un ou plusieurs levier(s), selon la dimension de la porte-fenêtre, et le ou les rabat par pression latérale. Dans ce dernier cas le ou les levier(s) rabattu(s) actionne(nt) un contacteur. Ce contacteur transmet l'information au dispositif de commande automatique de la machine.

## Revendications

1) Machine pour la pose automatique de joint en particulier d'un joint extérieur dans une rainure de vantail de fenêtre ou de porte-fenêtre, comportant un mécanisme d'amenage, de mise en référence et de mesure du vantail, un portique support, un système de dévidage du joint, un système de bridage du vantail et un dispositif de pose et de découpe du joint comprenant :
- un bâti,
- un portique mobile en translation sur ce bâti,
- un chariot mobile en translation sur ce portique,
caractérisée en ce que ledit chariot (7) mobile supporte une tête de manipulation (3) rotative par rapport au chariot et comprenant des moyens de guidage et d'entraînement du joint, des moyens de coupe du joint et des moyens de pose du joint.

2) Machine selon la revendication 1, caractérisée en ce que la tête de manipulation (3) comporte une partie fixe (10) supportant les moyens de coupe et un bras (11) articulé sur celle-ci supportant à son extrémité libre les moyens de pose du joint.

3) Machine selon la revendication 1 ou 2, caractérisée en ce que lesdits moyens de pose sont constitués d'un organe de pose (37) venant en contact avec le bord externe du joint et le forçant à entrer dans la rainure du vantail et un organe presseur (38, 39) destiné à presser le joint dans un sens perpendiculaire au sens d'introduction de celui-ci dans la rainure, à proximité du chant du vantail.

4) Machine selon la revendication 3, caractérisée en ce que ledit organe de pose est un galet (37) rotatif autour d'un axe sensiblement vertical solidaire du bras (11).

5) Machine selon la revendication 3 ou 4, caractérisé en ce que ledit organe presseur est un galet (38) rotatif autour d'un axe sensiblement horizontal solidaire du bras (11)

6) Machine selon la revendication 3 ou 4, caractérisée en ce que ledit organe presseur est un doigt (39) fixé au bras (11).

7) Machine selon la revendication 3 ou 4, caractérisée en ce que l'organe presseur est un doigt mobile (50) rétractable.

8) Machine selon la revendication 7, caractérisée en ce que le doigt mobile rétractable est un doigt (50) monté pivotant sur l'axe (35) de la partie mobile (11) de la tête de manipulation et commandé par un vérin (51).

9) Machine selon l'une quelconque des revendications précédentes, caractérisée en ce que lesdits moyens de coupe sont constitués d'un bloc de coupe (28) comprenant deux jeux de lames dont l'un est destiné à réaliser une découpe angulaire et l'autre une coupe droite, ces jeux de lames étant actionnés par des vérins à double effet.

10) Machine selon l'une quelconque des revendications précédentes, caractérisée en ce que lesdits moyens de guidage et d'entraînement sont constitués d'un galet d'entraînement (24) à garniture élastique coopérant avec une poulie de renvoi (23), elle-même en aval d'une poulie folle (21) recevant le joint passant au travers du chariot (7) par un fût (8), ce galet (24) étant entraîné par un moteur à vitesse variable (25) fixé à la tête de manipulation (3) et ceci par l'intermédiaire d'un limiteur de couple (26) solidaire du galet (24).

11) Machine selon l'une quelconque des revendications 6 à 10, caractérisée en ce qu'à l'extrémité libre du bras, est monté un doigt mobile (41) solidaire d'un axe d'un vérin rotatif (42), incliné par rapport à la verticale, ce doigt étant destiné à soutenir le joint, à l'extérieur du vantail, lors de la rotation de la tête, à chaque angle de fenêtre.

12) Machine selon l'une quelconque des revendications précédentes, caractérisée en ce qu'un guidage repère (43, 47) est placé à proximité de l'articulation du bras mobile (11), ce guidage étant placé et formé pour assurer le positionnement du joint dans la rainure du vantail.

13) Machine selon l'une quelconque des revendications précédentes, caractérisée en ce que le mécanisme d'amenage comporte au moins un doigt d'entraînement positionnant l'ouvrant à équiper dans un angle de référence.

14) Machine selon la revendication 13, caractérisée en ce que le mécanisme d'amenage comporte deux doigts d'entraînement dont l'un positionne dans un angle de référence un ouvrant à équiper tandis que l'autre évacue un ouvrant équipé.

15) Machine selon la revendication 14, caractérisée en ce que les deux doigts d'entraînement ont un mouvement de va et vient synchronisé.

16) Machine selon la revendication 14 ou 15, caractérisée en ce qu'une rive coopère avec le doigt d'entraînement d'amenage pour définir le positionnement de l'angle de référence de l'ouvrant.

17) Machine selon l'une quelconque des revendications précédentes, caractérisée en ce que des organes d'appui et de bridage du vantail (B) sont prévus sur le chariot (7).

18) Machine selon la revendication 17, caractérisée en ce qu'un organe (100) mobile d'appui vertical escamotable est prévu sur la partie fixe (10) de la tête de manipulation, cet organe (100) maintenant la planéité du vantail (B) en appuyant sur la face supérieure du battant (B).

19) Machine selon la revendication 18, caractérisée en ce que l'organe mobile comprend un galet (110) rotatif selon un axe sensiblement horizontal.

20) Machine selon la revendication 19, caractérisée en ce que le galet escamotable (110) est déplacé d'une position active d'appui à une position de repos, grâce à un vérin (120) par l'intermédiaire d'un bras coudé (130) articulé.

21) Machine selon la revendication 17, caractérisée en ce qu'un organe d'appui ponctuel (200) est prévu sur le chariot (7).

22) Machine selon la revendication 21, caractérisée en ce que l'organe (200) est constitué d'un vérin vertical dont la tige (210) est pourvue à son extrémité d'un patin d'appui (220).

23) Machine selon l'une quelconque des revendications précédentes, caractérisée en ce que la table de chargement est équipée de moyens de détection des battants de porte-fenêtre.

24) Machine selon la revendication 23, caractérisée en ce que lesdits moyens sont constitués de leviers faisant saillie hors de la table de chargement et rabattables par pression latérale, ces leviers actionnant un contacteur.

# FIG.1

A

B

C

# FIG.2

1
4
5
6
2
y
8
X
7
3
5
4

EP 0 387 124 A1

FIG.3

FIG.4

FIG.5

FIG.6

EP 0 387 124 A1

FIG.7

FIG.8

EP 0 387 124 A1

FIG.9

FIG.10

_FIG.11_

_FIG.12_

_FIG.13_

FIG.14

FIG.15

FIG.16

FIG_17

**FIG_18**

52

53

50

**FIG_19**

52

53

50

51

11

37

10

35

50

L1

L2

**FIG_20**

EP 0 387 124 A1

FIG.21

FIG.22

FIG.23

FIG.24

FIG.25

FIG. 26

EP 0 387 124 A1

FIG. 27

EP 0 387 124 A1

FIG. 28

FIG. 29

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 240 968 (KNAUST) * En entier * | 1 | B 23 P 19/04 E 04 F 21/00 |
| Y | | 2 | |
| A | | 5,9 | |
| | --- | | |
| Y | DE-A-2 915 282 (STEGHERR) * Page 6, lignes 12-17 * | 2 | |
| A | | 5,9 | |
| | --- | | |
| A | FR-A-2 096 757 (CASANOVA) * Page 13, lignes 13-31 * | 3-5 | |
| | --- | | |
| A | US-A-3 027 629 (CURTIS) * Figures * | 6-8,17 | |
| | --- | | |
| A | US-A-4 766 661 (DUVERNAY) * Figures * | 1 | |
| | --- | | |
| A | PATENT ABSTRACTS OF JAPAN, vol. 9, no. 163 (P-371)[1886], 9 juillet 1985; & JP-A-60 40 906 (FUJI JUKOGYO K.K.) 04-03-1985 | 7 | |
| | --- | | DOMAINES TECHNIQUES RECHERCHES (Int. Cl.5) |
| A | DE-A-3 710 726 (SCHLEICHER) * Figure; colonne 3, lignes 18-42 * ----- | 1,10 | B 23 P B 25 B E 04 F |

Le présent rapport a été établi pour toutes les revendications

| Lieu de la recherche | Date d'achèvement de la recherche | Examinateur |
|---|---|---|
| LA HAYE | 16-05-1990 | RIS M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)